(19) Europäisches Patentamt
European Patent Office
Office européen des brevets

(11) **EP 2 620 711 B1**

(12) **EUROPEAN PATENT SPECIFICATION**

(45) Date of publication and mention
of the grant of the patent:
**20.03.2019 Bulletin 2019/12**

(21) Application number: **12178766.7**

(22) Date of filing: **01.08.2012**

(51) Int Cl.:
*F24H 4/04* *(2006.01)*    *F24D 3/08* *(2006.01)*
*F24D 17/00* *(2006.01)*    *F24D 19/10* *(2006.01)*
*F24D 3/18* *(2006.01)*    *F24D 17/02* *(2006.01)*

(54) **Heat Source Unit Control System**

Wärmequellen-Steuerungssystem für eine Wärmequelle

Système de commande d'une unité de source de chaleur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2012 JP 2012016051**

(43) Date of publication of application:
**31.07.2013 Bulletin 2013/31**

(73) Proprietor: **Mitsubishi Electric Corporation
Chiyoda-ku
Tokyo 100-8310 (JP)**

(72) Inventor: **Ushijima, Takahiro
Chiyoda-ku, Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A2- 2 362 164      JP-A- 2007 198 630
JP-A- 2010 048 518**

**Description**

CROSS-REFERENCE TO RELATED APPLICATIONS

This application is based on and claims the benefit of priority from Japanese Patent Application No. 2012-016051, filed in Japan on January 30, 2012, the content of which is incorporated herein by reference in its entirety.

**Technical Field**

The present invention relates to a heat source unit control system, and more particularly to a water heating system or a water heating and hydronic heating system, which has a controller installed therein to control a heat-pump heat source (hereinafter, also referred to as a heat pump device) as a heat source unit so that circulating water to heat domestic hot water is at an optimum temperature.

**Background Art**

Some water heating systems are designed to indirectly heat domestic hot water (for shower or the like) via circulating water by a heat-pump heat source or the like.
In the water heating operation of this type of water heating system, the heat source, such as a heat-pump heat source, is controlled so that domestic hot water reaches a target temperature. In most cases, however, the temperature of the circulating water is left uncontrolled (see, e.g., Patent Literature 1). JP 2007 198 630 refers to a hot water storage type water heater. According to the teaching of this document, a control device is constituted to select the boiling-up operation terminating condition according to a temperature difference determined on the basis of a boiling-up temperature flowing out of a water-refrigerant heat exchanger and a hot water supply temperature at an upper portion in the hot water storage tank. Thus the optimum boiling-up operation terminating condition not affected by the installation condition can be set. JP 2007 198 630 discloses a heat source unit control system, comprising:

a heat-transfer medium circulation circuit in which a heat-transfer medium is circulable, the heat-transfer medium circulation circuit including:

- a tank that is configured to receive the heat-transfer medium;
- a heat source unit that is configured to receive the heat-transfer medium and is configured to perform one of heating and cooling the heat-transfer medium,
- a forward channel through which the heat-transfer medium flows from the heat source unit to the tank; and
- a return channel through which the heat-transfer medium flows from the tank to the heat source unit;
- a tank-water temperature sensor that is configured to detect a temperature Tt of the water stored in the tank;
- a heat-transfer medium temperature sensor that is configured to detect a temperature Tm of the heat-transfer medium at a predetermined portion of the heat-transfer medium circulation circuit; and
- a controller that is configured to control the heat source unit based on a temperature difference between the temperature Tm of the heat-transfer medium detected by the heat-transfer medium temperature sensor and the temperature Tt of the water detected by the tank-water temperature sensor.

**Citation List**

**Patent Literature**

Patent Literature 1 JP 9-68369 A

**Summary of Invention**

**Technical Problem**

If the temperature of circulating water is thus left uncontrolled, the amount of heat transferred to circulating water by a heat-pump heat source and the amount of heat transferred to domestic hot water from the circulating water may become unbalanced depending on the temperature of the circulating water, the temperature of the domestic water, or the performance of the heat exchanger exchanging heat between the circulating water and the domestic hot water.
As a result, the temperature of the circulating water rises unnecessarily high, which causes the heat-pump heat source to operate constantly at a maximum outlet temperature of heated water. Accordingly, the heat-pump heat source efficiency is reduced.

An object of the present invention is to provide a heat source unit control system which prevents a heat-pump heat source from operating at a maximum outlet temperature of heated water which is caused by an unnecessarily high temperature of circulating water.

**Solution to Problem**

A heat source unit control system according to the invention includes the features of claim 1.

**Advantageous Effects of Invention**

A heat source unit control system according to the present invention can prevent a heat-pump heat source from operating at a maximum outlet temperature of heated water which is caused by an unnecessarily high temperature of circulating water.

**Brief Description of Drawings**

The present invention will become fully understood from the detailed description given hereinafter in conjunction with the accompanying drawings, in which:

Fig. 1 shows a configuration of a water heating system 1000 according to a first embodiment which is not part of the invention;
Fig. 2 shows a configuration of a heat-pump heat source 100 according to the first embodiment;
Fig. 3 is a flow chart illustrating a water heating operation performed by a controller 500 according to the first embodiment;
Fig. 4 is a graph showing a heated-water outlet temperature, a return-water temperature, and a tank-water temperature in a water heating operation which is not controlled by the controller 500, illustrating the fist embodiment;
Fig. 5 is a graph showing the heated-water outlet temperature, the return-water temperature, and the tank-water temperature in a water heating operation which is controlled by the controller 500 according to the first embodiment;
Fig. 6 is a flow chart showing a water heating operation which is controlled by the controller 500 according to a second embodiment which is not part of the invention;
Fig. 7 is a flow chart showing a water heating operation which is controlled by the controller 500 according to a third embodiment which discloses the invention;
Fig. 8 shows a configuration of the water heating system 1000 according to a fourth embodiment which is only part of the invention when combined with the third embodiment;
Fig. 9 shows a configuration in part of the water heating system 1000 according to a fifth embodiment which is not part of the invention; and
Fig. 10 shows a configuration of the heat-pump heat source 100 according to a sixth embodiment which is only part of the invention when combined with the third embodiment.

**Description of Embodiments**

In describing preferred embodiments illustrated in the drawings, specific terminology is employed for the sake of clarity. However, the disclosure of the present invention is not intended to be limited to the specific terminology so selected, and it is to be understood that each specific element includes all technical equivalents that operate in a similar manner and achieve a similar result.

(Definition of terminology)

In the embodiments elaborated hereinafter, a controller controls the operating frequency of a compressor based on temperatures detected by various temperature sensors. The following defines values detected by the temperature sensors.

(1) Heated-water outlet temperature sensor S(out):
Tm(out) denotes a temperature detected by the heated-water outlet temperature sensor S(out). The detected temperature Tm(out) is also referred to as a heated-water outlet temperature Tm(out). The heated-water outlet temperature sensor S(out) is also referred to as a heat-transfer medium temperature sensor.

(2) Return-water temperature sensor S(in):
Tm(in) denotes a temperature detected by the return-water temperature sensor S(in). The detected temperature Tm(in) is also referred to as a return-water temperature Tm(in). The return-water temperature sensor S(in) is also referred to as a heat-transfer medium temperature sensor.
(3) Tank-water temperature sensor S(t):
Tt denotes a temperature detected by the tank-water temperature sensor S(t). The detected temperature Tt is also referred to as a tank-water temperature Tt.

**Embodiment 1.**

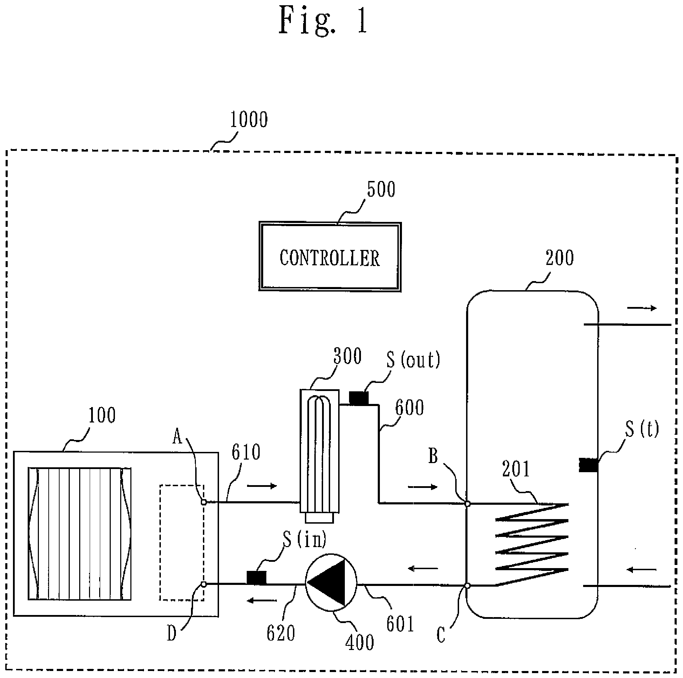

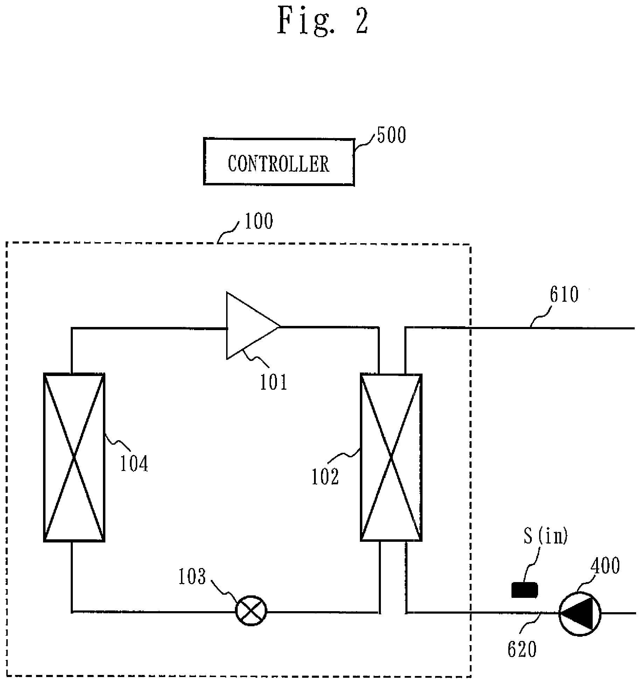

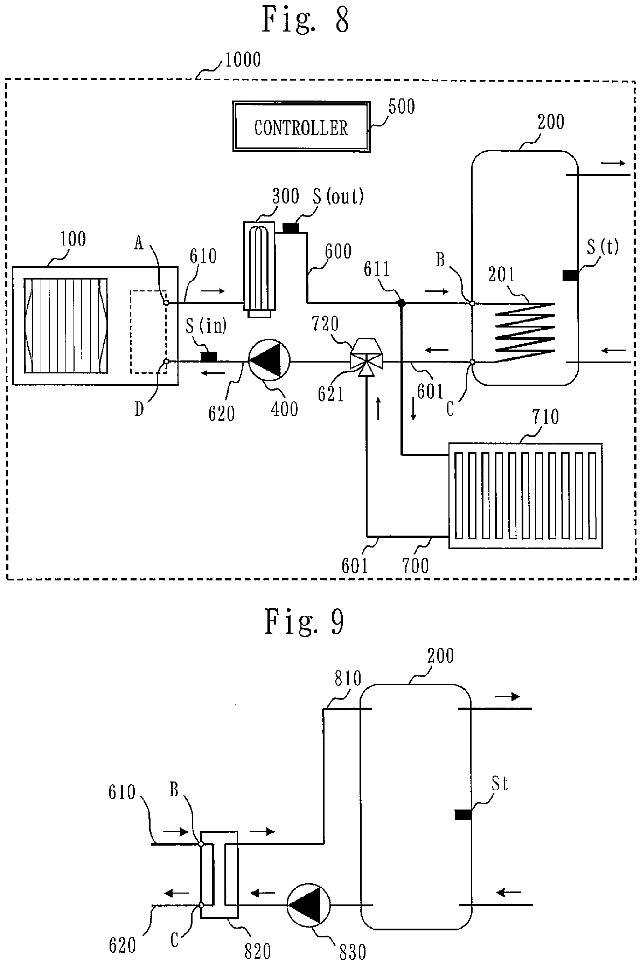

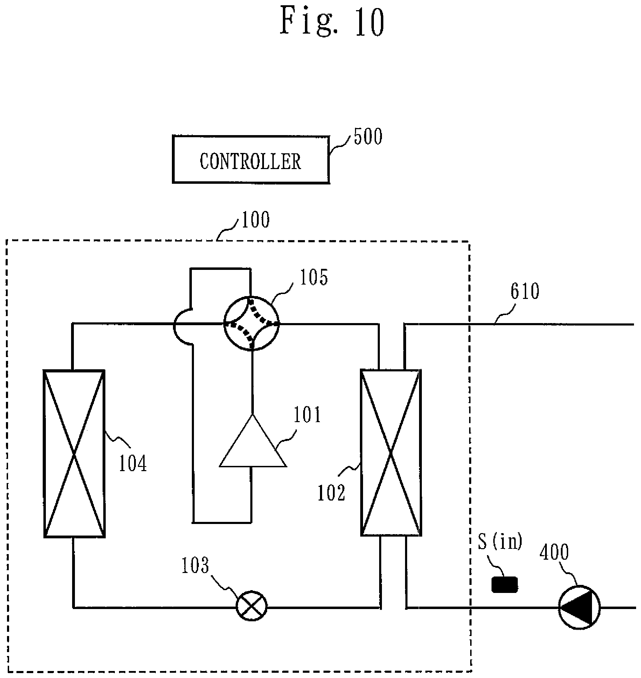

A first embodiment is described with reference to Fig. 1 to Fig. 5. Fig. 1 shows a water circuit illustrating a water heating system 1000 (heat source unit control system) according to the first embodiment. It is to be noted that the configuration of the water heating system 1000 shown in Fig. 1 is also applied to those described in second and third embodiments. The water heating system 1000 is basically configured to include a heat-pump heat source 100 (example of a heat source unit), an auxiliary heater 300, a tank heat exchanger 201 for tank water, a circulator pump 400, and water circulation channel forming means 601 (e.g., piping) to connect those elements. Water (example of a heat-transfer medium) flows inside the water circulation channel forming means 601. The water circulation channel forming means 601 serially connects the heat-pump heat source 100, the auxiliary heater 300, the tank heat exchanger 201, the circulator pump 400, and the heat-pump heat source 100 again to form a circulation circuit 600 (heat-transfer medium circulation circuit) through which water (hereinafter, referred to as circulating water) as a heat-transfer medium circulates. It is to be noted that water is not the only possible heat-transfer medium that circulates in the circulation circuit 600, and antifreeze liquid, or any type of refrigerant other than antifreeze liquid may alternatively be employed. The circulation circuit 600 includes a forward channel 610 (A - B in Fig. 1) through which water in the water circulation channel forming means 601 flows from the heat-pump heat source 100 to the tank heat exchanger 201, and a return channel 620 (C - D in Fig. 1) through which water in the water circulation channel forming means 601 flows from the tank heat exchanger 201 to the heat-pump heat source 100. Thus, the heat-pump heat source 100 and the tank heat exchanger 201 are connected via the forward channel 610 and the rerun channel 620 in the circulation circuit 600.
The water heating system 1000 has a controller 500 installed therein. The controller 500 controls the operating frequency of a compressor 101 (see Fig. 2). It is to be noted that the controller 500 also controls an electric three-way valve 720 (see Fig. 8) described in a fourth embodiment later, and a four-way valve 105 (see Fig. 10) described in a sixth embodiment later.

(Three sensors)

(1) Heated-water outlet temperature sensor S(out):
In the water heating and support system 1000, the heated-water outlet temperature sensor S(out) is installed between the auxiliary heater 300 and the tank heat exchanger 201 along the forward channel. The heated-water outlet temperature sensor S(out) measures the temperature (heated-water outlet temperature Tm(out)) of heated water supplied to the tank heat exchanger 201.
(2) Return-water temperature sensor S(in):
The return-water temperature sensor S(in) is installed between the circulator pump 400 and the heat-pump heat source 100. The return-water temperature sensor S(in) measures the temperature (return-water temperature Tm(in)) of heated water returning to the heat-pump heat source 100.
(3) Tank-water temperature sensor S(t):
The tank-water temperature sensor S(t) is installed in a hot water storage tank 200. The tank-water temperature sensor S(t) measures the temperature (tank-water temperature Tt) of domestic hot water stored in the hot water storage tank 200.
(4) It is to be noted that the return-water temperature Tm(in) as measurement information by the return-water temperature sensor S(in), and the tank-water temperature Tt as measurement information by the tank-water temperature sensor S(t) are utilized in the first embodiment. The heated-water outlet temperature Tm(out) measured by the heated-water outlet temperature sensor S(out) is not utilized here in the first embodiment.

(1) More specifically, in the first embodiment, the controller 500 controls the ON/OFF operation of the heat-pump heat source 100 and the operating frequency of the compressor 101 (see Fig. 2) based on the return-water temperature Tm(in) and the tank-water temperature Tt as the measurement information by the return-water temperature sensor S(in) and the tank-water temperature sensor S(t).

(2) It is to be noted that, in the second embodiment, the controller 500 controls the heat-pump heat source 100 based on the values detected by the heated-water outlet temperature sensor S(out) and the tank-water temperature sensor S(t).

(3) It is also to be noted that, in the third embodiment, the controller 500 controls the heat-pump heat source 100 based on the three values detected by the heated-water outlet temperature sensor S(out), the return-water temperature sensor S(in), and the tank-water temperature sensor S(t).

Thus, as described above, the water heating system 1000 includes the circulation circuit 600, the return-water temperature sensor S(in), the heated-water outlet temperature sensor S(out), the tank-water temperature sensor S(t), and the controller 500.

Fig. 2 shows an example of the configuration of the heat-pump heat source 100. Referring to Fig. 2, the heat-pump heat source 100 includes the compressor 101, a first heat exchanger 102, an expansion mechanism 103, and a second heat exchanger 104 to form a refrigeration cycle. The operating frequency of the compressor 101 can be controlled by the controller 500. In the case of Fig. 2, the first heat exchanger 102 is a radiator to heat the circulating water, and the second heat exchanger 104 is a heat absorber.

A detailed description is now given of the water cycle in the water heating system 1000. The circulating water circulates in the water circuit by the circulator pump 400 while the water heating system is in operation. The circulating water discharged from the circulator pump 400 is heated by the heat-pump heat source 100. The heated circulating water is supplied to the tank heat exchanger 201 via the auxiliary heater 300, and the heat is transferred to the domestic hot water stored in the hot water storage tank 200. After the heat transfer, the circulating water is sucked in by the circulator pump 400.

(Operation of controller 500)

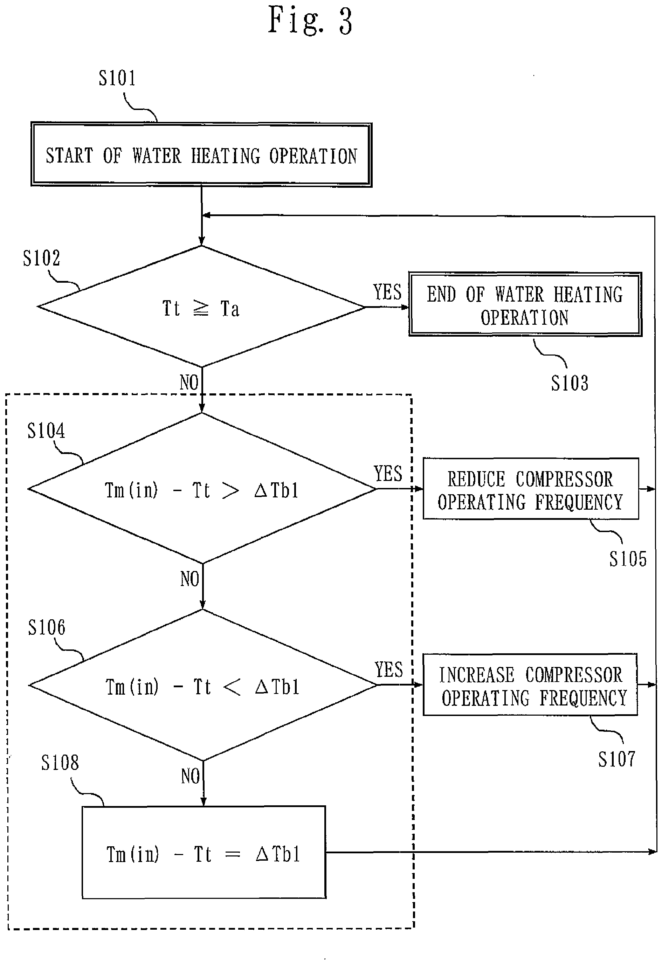

A water heating operation performed in the water heating system 1000 is described with reference to Fig. 3. Fig. 3 is a flow chart showing an operation of the controller 500 in a water heating operation. It is to be noted that the operations in respective steps shown in Fig. 3 are performed by the controller 500.

When conditions for starting a water heating operation are met by the water heating system 1000, the water heating operation is started at step S101.

In step S102, the controller 500 determines whether or not the temperature Tt detected by the tank-water temperature sensor S(t) has reached a preset target value Ta.

Specifically, it is determined if $Tt \geq Ta$. If the temperature Tt detected by the tank-water temperature sensor S(t) is at or above the target value Ta, then the process proceeds to step S103 where the water heating operation is terminated. If the temperature Tt detected by the tank-water temperature sensor S(t) is below the target value Ta, then the process proceeds to step S104.

In Step S104, the controller 500 determines whether or not a difference between the temperature Tm(in) detected by the return-water temperature sensor S(in) and the temperature Tt detected by the tank-water temperate sensor S(t) is greater than a preset target value $\Delta Tb1$.

Specifically, it is determined if $Tm(in) - Tt > \Delta Tb1$. If $Tm(in) - Tt > \Delta Tb1$, it can be assumed that the amount of heat transferred to the circulating water by the heat-pump heat source 100 is greater than a maximum amount of heat transferred to the domestic hot water from the circulating water. Accordingly, the process proceeds to step S105 where the controller 500 controls the compressor 101 to reduce the operating frequency. If not, the process proceeds to step S106.

In step S106, the controller 500 determines whether or not a difference between the temperature Tm(in) detected by the return-water temperature sensor S(in) and the temperature Tt detected by the tank-water temperature sensor S(t) is below the target value $\Delta Tb1$.

Specifically, it is determined if $Tm(in) - Tt < \Delta Tb1$. If $Tm(in) - Tt < \Delta Tb1$, it can be assumed that the amount of heat transferred to the circulating water by the heat-pump heat source 100 is smaller than the maximum amount of heat transferred to the domestic water from the circulating water. Accordingly, the process proceeds to step S107 where the controller 500 controls the compressor 101 to increase the operating frequency.

If not, then $Tm(in) - Tt = \Delta Tb1$ (step S108). In this instance, it can be assumed that the amount of heat transferred to the circulating water in the heat-pump heat source 100 is equivalent to the maximum amount of heat transferred to the domestic water from the circulating water. Accordingly, the controller 500 controls the compressor 101 to maintain the operating frequency, and the process goes back to step S102.

(Without control of controller 500)

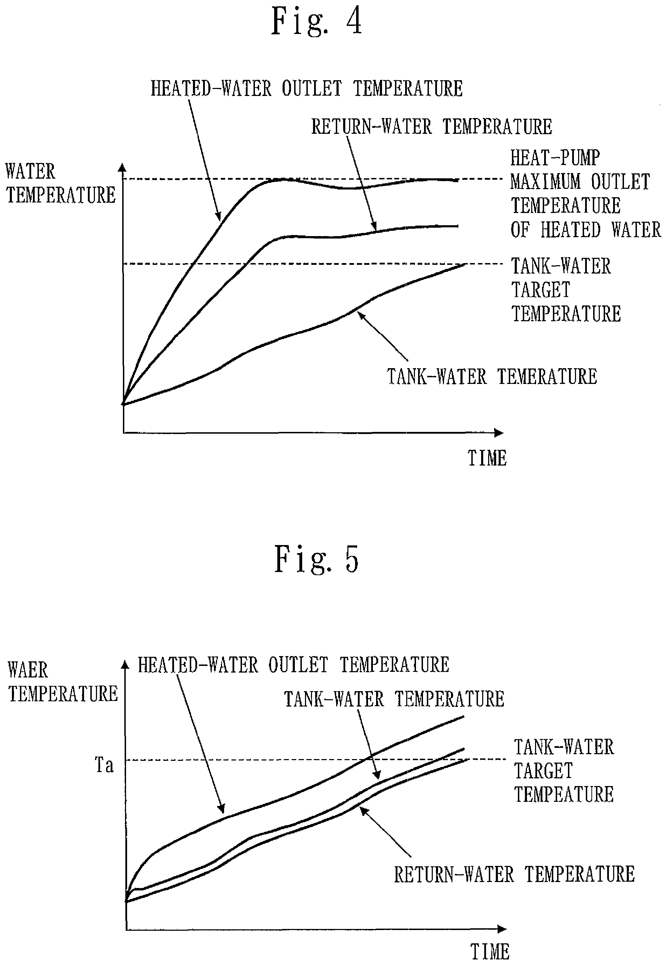

Fig. 4 is a graph showing a performance of the water heating operation without the control by the controller 500 described with reference to Fig. 3. Fig. 5 is a graph showing a performance of the water heating operation with the control of the controller 500 described with reference to Fig. 3. Referring to the graph of Fig. 4, the temperature of the circulating water (heated-water outlet temperature) goes up to a heat-pump maximum outlet temperature of heated water, regardless of the temperature of water in the tank, because the amount of heat transferred to the circulating water by the heat-pump heat source 100 is greater than the maximum amount of heat transferred to the domestic hot water (tank water) from the circulating water.

Referring to the graph of Fig. 5, however, the temperature of the circulating water (heated-water outlet temperature) is prevented from increasing unnecessarily because the amount of heat transferred to the circulating water by the heat-pump heat source 100 is equivalent to the amount of heat transferred to the domestic hot water from the circulating water in the water heating operation based on the control described with reference to Fig. 3 in the first embodiment. Accordingly, the water heating operation can be performed with the circulating water at an optimum temperature. This is also applied to the second and third embodiments.

Thus, as described above, in the water heating system 1000 according to the first embodiment, the temperature difference between the temperature Tm(in) detected by the return-water temperature sensor S(in) and the temperature Tt detected by the tank-water temperature sensor S(t) is controlled to reach the target value ΔTb1 so that the temperature Tt detected by the tank-water temperature sensor S(t) is at or above the target value Ta. More specifically, the controller 500 controls the operating frequency of the controller 101 so that Tm(in) - Tt = ΔTb1. Accordingly, the heat-pump heart source 100 can be controlled so that the amount of heat transferred to the circulating water by the heat-pump heat source 100 becomes equivalent to the maximum amount of heat transferred to the domestic hot water from the circulating water. This allows the water hating operation to be performed with the circulating water at an optimum temperature.

## Embodiment 2.

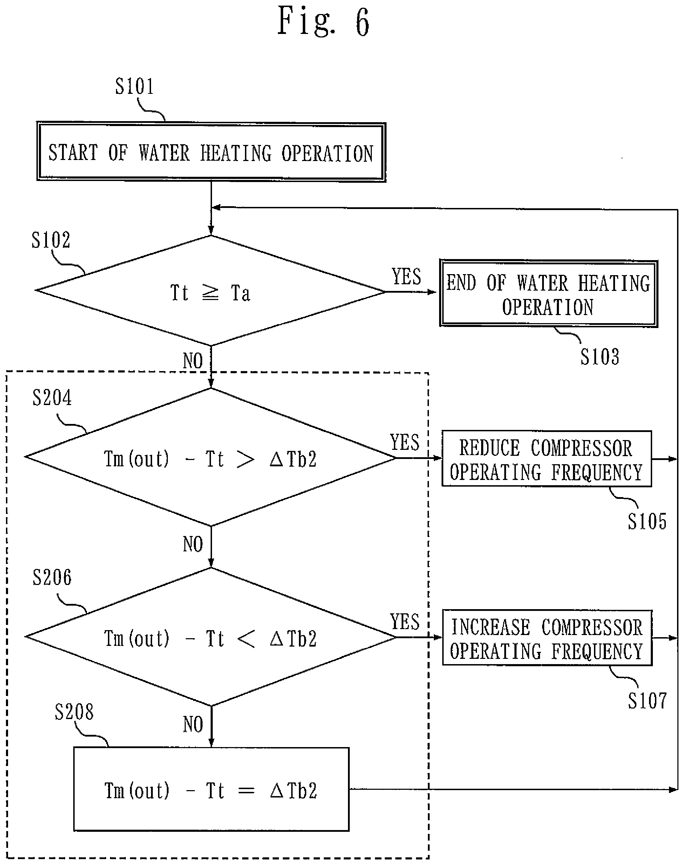

The water heating system 1000 according to a second embodiment is now described with reference to Fig. 6. Fig. 6 is a flow chart showing an operation of the controller 500 in a water heating operation according to the second embodiment. Fig. 6 corresponds to Fig. 3 showing the first embodiment.

In the second embodiment, the controller 500 controls the operating frequency of the heat-pump heat source 100 based on values detected by the heated-water outlet temperature sensor S(out) and the tank-water temperature sensor S(t). More specifically, the operating frequency of the compressor 101 in the heat-pump heat source 100 is controlled based on a temperature difference between the temperature Tm(out) detected by the heated-water outlet temperature sensor S(out) shown in Fig. 1 and the temperature Tt detected by the tank-water temperature sensor S(t) shown in Fig. 1. As can be seen, Fig. 6 modifies Fig. 3 by replacing the temperature Tm(in) detected by the return-water temperature sensor S(in) by the temperature Tm(out) detected by the heated-water outlet temperature sensor S(out). More particularly, operations in respective steps S204, S206 and S208 enclosed by a broken line in Fig. 6 differ from those in corresponding steps S104, S106 and S108 enclosed by the broken line in Fig. 3.

With further reference to Fig. 6, ΔTb2 shown in respective steps S204 to S208 denotes a target value (cf. ΔTb1 in Fig. 3). The target values ΔTb2 and ΔTb1 are not usually the same value if the target value Ta in step S102 in Fig. 6 and the target value Ta in step S102 in Fig. 3 are the same value.

## Embodiment 3.

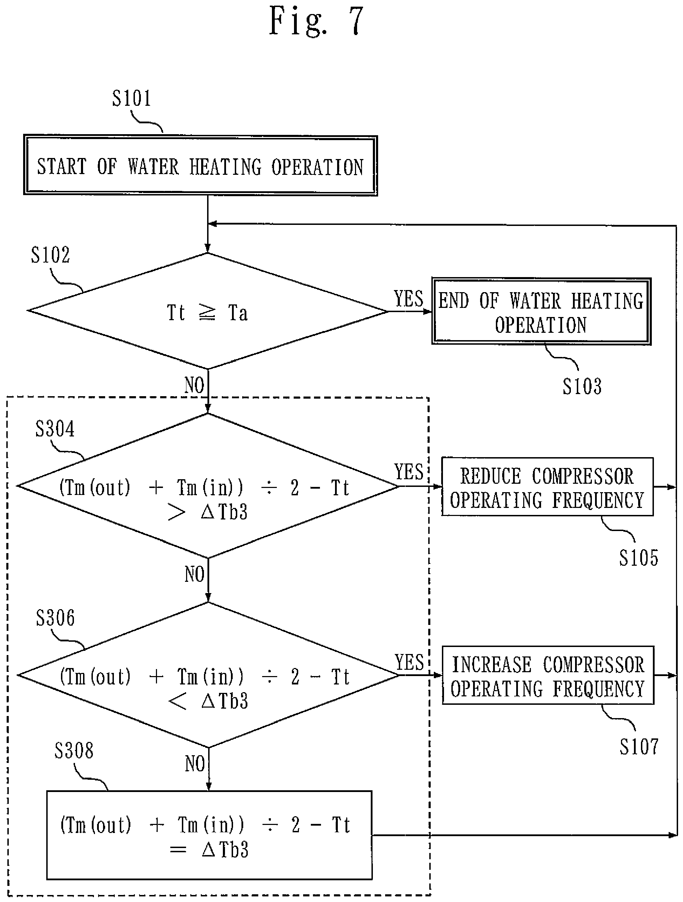

The water heating system 1000 according to a third embodiment is now described with reference to Fig. 7. Fig. 7 is a flow chart showing an operation of the controller 500 in a water heating operation according to the third embodiment. Fig. 7 corresponds to Fig. 3 showing the first embodiment.

In the third embodiment, the controller 500 controls the operating frequency of the heat-pump heat source 100 based on the values detected by the return-water temperature sensor S(in), the heated-water outlet temperature sensor S(out), and the tank-water temperature sensor S(t). More specifically, the operating frequency of the compressor 101 in the heat-pump heat source 100 is controlled by the controller 500 based on the temperature difference between the temperature Tt of water in the tank detected by the tank-water temperature sensor S(t) and a mean value (circulation water temperature mean value) of the temperature Tm(out) of the circulating water detected by the heated-water outlet temperature sensor S(out) shown in Fig. 1 and the temperature Tm(in) of the circulating water detected by the return-water temperature sensor S(in) shown in Fig. 1. As can be seen, Fig. 7 modifies Fig. 3 by replacing the temperature Tm(in) detected by the return-water temperature sensor S(in) by the circulation water temperature mean value. The circulation water temperature mean value is determined by the following equation:

$$\text{circulation water temperature mean value} = (Tm(out) + Tm(in)) / 2$$

where Tm(out) denotes the temperature detected by the heated-water outlet temperature sensor S(out) and Tm(in) denotes the temperature detected by the return-water temperature sensor S(in).

More specifically, operations in respective steps S304, S306 and S308 enclosed by a broken line in Fig. 7 differ from those in corresponding steps S104, S106 and S108 enclosed by the broken line in Fig. 3.

With further reference to Fig. 7, $\Delta Tb3$ shown in respective steps S304 to S308 denotes a target value (cf. $\Delta Tb1$ in Fig. 3). The target values $\Delta Tb3$ and $\Delta Tb1$ are not usually the same value if the target value Ta in step S102 in Fig. 7 and the target value Ta in step S102 in Fig. 3 are the same value.

**Embodiment 4.**

Fig. 8 shows a water circuit of the water heating system 1000 designed for water heating and hydronic heating according to a fourth embodiment. The water circuit shown in Fig. 8 modifies the water circuit shown in Fig. 1 which illustrates the first to the third embodiments, by adding a diverging point (fork 611) between the auxiliary heater 300 and the tank heat exchanger 201 along the forward channel 610, and a meeting point (junction 621) between the tank heat exchanger 201 and the circulator pump 400 along the return channel 620 to form a branch channel 700. Along the branch channel 700, a hydronic heater 710 (branch heat exchanger) is installed in parallel to the tank heat exchanger 201 by the water circulation channel forming means 601. Additionally, an electric three-way valve 720 (switch) is installed either at the fork 611 along the forward channel 610 or at the junction 621 along the return channel 620 (e.g., the electric three-way valve 720 is disposed at the junction 621 in Fig. 8) to switch between a route via the tank heat exchanger 201 and a route via the hydronic heater 710 (branch channel 700). The configuration shown in Fig. 8 serves to allow the controller 500 to control the electric three-way valve 720 to switch between a water heating operation and a hydronic heating operation.

Thus, as can be seen in Fig. 8, the water heating system 1000 is configured to include the branch channel 700 which separates from the forward channel at the fork 611 and meets the return channel at the junction 621, and along which the hydronic heater 710 is installed. The electric three-way valve 720 switches the flow of the circulating water between: a route from the heat-pump heat source 100 via the fork 611 along the forward channel, the tank heat exchanger 201, and the junction 621 along the return channel, back to the heat-pump heat source 100; and a route from the heat-pump heat source 100 via the fork 611 along the forward channel, the hydronic heater 710, and the junction 621 along the return channel, back to the heat-pump heat source 100. This switching of the electric three-way valve 720 is controlled by the controller 500.

It is to be noted that the water heating operation of the fourth embodiment can be performed in a similar manner to any of those described in the first to third embodiments.

**Embodiment 5.**

With reference to the foregoing first to fourth embodiments, the tank heat exchanger 201 is installed inside the hot water storage tank 200 as shown in Fig. 1. According to a fifth embodiment, however, as shown in Fig. 9, a heat exchanger 820 as a heat exchanger for tank water of the fifth embodiment, the hot water storage tank 200 and a hot water supply pump 830 are connected by water circulation channel forming means 810 (e.g., piping). The configuration shown in Fig. 9 can also serve to achieve a water heating operation and effects similar to any of those described in the first to fourth embodiments.

With reference to the foregoing first to fifth embodiments, the water heating system 1000 is configured so that the heat-pump heat source 100, the auxiliary heater 300, the tank heat exchanger 201, and the circulator pump 400 are annularly connected by piping, and heated water is supplied from the heat-pump heat source 100 to the tank heat exchanger 201 via the auxiliary heater 300 to transfer the heat to hot water stored in the hot water storage tank 200. Further, in the water heating system 1000, the heated-water outlet temperature sensor S(out) is arranged at the outlet of the auxiliary heater 300, the return-water temperature sensor S(in) is arranged at the inlet of the heat-pump heat source 100, and the tank-water temperature sensor S(t) is arranged inside the hot water storage tank 200 to detect the temperature of hot water stored in the hot water storage tank 200.

Further, the controller 500 controls the heat-pump heat source 100 so that the temperature of hot water stored in the hot water storage tank 200 becomes the target value Ta, that is,

(1) a difference between the temperature Tm(in) detected by the return-water temperature sensor S(in) and the temperature Tt detected by the tank-water temperature sensor S(t) becomes the target value $\Delta Tb1$;

(2) a difference between the temperature Tm(out) detected by the heated-water outlet temperature sensor S(out) and the temperature Tt detected by the tank-water temperature sensor S(t) becomes the target value ΔTb2; or

(3) a difference between the temperature Tt detected by the tank-water temperature sensor S(t) and the mean value of the temperature Tm(out) detected by the heated-water outlet temperature sensor S(out) and the temperature Tm(in) detected by the return-water temperature sensor S(in) becomes the target value ΔTb3.

Based on the control option (1), (2) or (3), the controller 500 can control the heat-pump heat source 100 so that circulating water to heat domestic hot water (tank water) has an optimum temperature.

**Embodiment 6.**

With reference to the foregoing first to fifth embodiments, water stored in the hot water storage tank 200 is heated in a water heating operation, that is, the circulating water is heated. Alternatively, however, the first to the fifth embodiments may be implemented where the circulating water is cooled. More specifically, the water heating operation may be applied to where water stored in the tank is cooled to the target temperature Ta or below, and the resultant cool temperature is maintained. In this instance, the inequality signs in the respective steps shown in Fig. 3, Fig. 6 and Fig. 7 are turned round. Then, in this case, the forward channel 610 and the return channel 620 are connected to a heat absorber in the heat-pump heat source 100. For example, as shown in Fig. 10, the heat-pump heat source 100 is configured with a four-way valve 105, and the first heat exchanger 102 is used as a heat absorber. The configuration shown in Fig. 10 can serve to allow the temperature of water stored in the hot-water storage tank 200 to be controlled at or above/below a certain temperature.

With reference to the foregoing first to sixth embodiments, the heat-pump heat source 100 is used as an example of a heat source unit. The heat-pump heat source 100 is, however, not the only possibility. If the control of heat transfer capability to circulating water by the controller 500 is allowed, any type of heat source unit can be used.

Numerous additional modifications and variations are possible in light of the above teachings. It is therefore to be understood that, within the scope of the appended claims, the disclosure of this patent specification may be practiced otherwise than as specifically described herein.

**Reference Signs List**

| | |
|---|---|
| S(out) | heated-water outlet temperature sensor |
| S(in) | return-water temperature sensor |
| S(t) | tank-water temperature sensor |
| Tm(out) | heated-water outlet temperature |
| Tm(in) | return-water temperature |
| Tt | tank-water temperature |
| 100 | heat-pump heat source |
| 101 | compressor |
| 102 | first heat exchanger |
| 103 | expansion mechanism |
| 104 | second heat exchanger |
| 105 | four-way valve |
| 200 | hot water storage tank |
| 201 | tank heat exchanger |
| 300 | auxiliary heater |
| 400 | circulator pump |
| 500 | controller |
| 600 | circulation circuit |
| 601 | water circulation channel forming means |
| 610 | forward channel |
| 611 | fork |
| 620 | return channel |
| 621 | junction |
| 700 | branch channel |
| 710 | hydronic heater |
| 720 | electric three-way valve |

| 810 | water circulation channel forming means |
| 820 | branch heat exchanger |
| 830 | hot water supply pump |
| 1000 | water heating system |

**Claims**

1. A heat source unit control system (1000), comprising:
a heat-transfer medium circulation circuit (600) in which a heat-transfer medium is circulable, the heat-transfer medium circulation circuit including:

> a tank heat exchanger (201) that is configured to receive the heat-transfer medium, and is configured to exchange heat between the heat-transfer medium and water stored in a tank;
> a heat source unit (100) that is configured to receive the heat-transfer medium and is configured to perform one of heating and cooling the heat-transfer medium,
> a forward channel (610) through which the heat-transfer medium flows from the heat source unit to the tank heat exchanger;
> a return channel (620) through which the heat-transfer medium flows from the tank heat exchanger to the heat source unit;
> a tank-water temperature sensor (S(t)) that is configured to detect a temperature Tt of the water stored in the tank;
> a heat-transfer medium temperature sensor that is configured to detect a temperature Tm(in) of the heat-transfer medium returning back to the heat source unit through the return channel in the heat-transfer medium circulation circuit,
> an additional heat-transfer medium temperature sensor (S(out)) that is configured to detect a temperature Tm(out) of the heat-transfer medium flowing out of the heat source unit through the forward channel in the heat-transfer medium circulation circuit, and
> a controller that is configured to control the heat source unit based on a temperature difference between the temperature Tt of the water detected by the tank-water temperature sensor and a mean value of the temperature Tm(in) of the heat-transfer medium detected by the heat transfer medium temperature sensor and the temperature Tm(out) of the heat-transfer medium detected by the additional heat-transfer medium temperature sensor.

2. The heat source unit control system according to claim 1, wherein:

> the heat source unit is a heat pump device that includes a compressor whose operating frequency is controllable, and
> the controller is configured to control the operating frequency of the compressor as the control of the heat source unit.

3. The heat source unit control system according to any one of claims 1 or 2, wherein the heat source unit is configured to heat the heat-transfer medium.

4. The heat source unit control system according to any one of claims 1 to 3, further comprising:

> a branch channel (700) that is configured to separate from the forward channel at a fork (611) along the forward channel as a diverging point, and is configured to join the return channel at a junction (621) along the return channel as a meeting point,
> a branch heat exchanger (710) installed along the branch channel, and
> a switch (720) that is configured to switch the flow of the heat-transfer medium between:
>
> > a route from the heat source unit via the fork along the forward channel, the tank heat exchanger, and the junction along the return channel, back to the heat source unit, and
> > a route from the heat source unit via the fork along the forward channel, the branch heat exchanger, and the junction along the return channel, back to the heat source unit.

**Patentansprüche**

1. Wärmequelleneinheit-Steuersystem (1000), umfassend:
einen Wärmeübertragungsmediumzirkulationskreislauf (600), in dem ein Wärmeübertragungsmedium zirkulierbar ist, wobei der Wärmeübertragungsmediumzirkulationskreislauf aufweist:

einen Tankwärmetauscher (201), der eingerichtet ist, das Wärmübertragungsmedium aufzunehmen, und eingerichtet ist, Wärme zwischen dem Wärmeübertragungsmedium und dem in einem Tank gespeicherten Wasser auszutauschen;
eine Wärmequelleneinheit (100), die eingerichtet ist, das Wärmeübertragungsmedium aufzunehmen, und eingerichtet ist, eines von einem Erwärmen und Kühlen des Wärmeübertragungsmediums durchzuführen,
einen Vorwärtskanal (610), durch den das Wärmeübertragungsmedium von der Wärmequelleneinheit hin zum Tankwärmetauscher strömt;
einen Rückführungskanal (620), durch den das Wärmeübertragungsmedium vom Tankwärmetauscher hin zur Wärmequelleneinheit strömt;
einen Tankwassertemperatursensor (S(t)), der eingerichtet ist, eine Temperatur Tt des im Tank gespeicherten Wassers zu detektieren;
einen Wärmeübertragungsmediumtemperatursensor, der eingerichtet ist, eine Temperatur Tm(in) des Wärmeübertragungsmediums, das durch den Rückführungskanal im Wärmeübertragungsmediumzirkulationskreislauf zur Wärmequelleneinheit zurückkehrt, zu detektieren,
einen zusätzlichen Wärmeübertragungsmediumtemperatursensor (S(out)), der eingerichtet ist, eine Temperatur Tm(out) des Wärmeübertragungsmediums, das aus der Wärmequelleneinheit durch den Vorwärtskanal im Wärmeübertragungsmediumzirkulationskreislauf herausströmt, zu detektieren, und
eine Steuereinheit, die eingerichtet ist, die Wärmequelleneinheit zu steuern basierend auf einer Temperaturdifferenz zwischen der durch den Tankwassertemperatursensor detektierten Temperatur Tt des Wassers und einem Mittelwert der durch den Wärmeübertragungsmediumtemperatursensor detektierten Temperatur Tm(in) des Wärmeübertragungsmediums und der durch den zusätzlichen Wärmeübertragungsmediumtemperatursensor detektierten Temperatur Tm(out) des Wärmeübertragungsmediums.

2. Wärmequelleneinheit-Steuersystem nach Anspruch 1, wobei:

die Wärmequelleneinheit eine Wärmepumpeneinrichtung ist, die einen Verdichter aufweist, dessen Betriebsfrequenz steuerbar ist, und
die Steuereinheit eingerichtet ist, die Betriebsfrequenz des Verdichters als die Steuerung der Wärmequelleneinheit zu steuern.

3. Wärmequelleneinheit-Steuersystem nach einem der Ansprüche 1 oder 2, wobei die Wärmequelleneinheit eingerichtet ist, das Wärmeübertragungsmedium zu erwärmen.

4. Wärmequelleneinheit-Steuersystem nach einem der Ansprüche 1 bis 3, ferner umfassend:

einen Zweigkanal (700), der eingerichtet ist, sich vom Vorwärtskanal an einer Gabelung (611) entlang des Vorwärtskanals als einen Abzweigungspunkt zu trennen, und eingerichtet ist, in den Rückführungskanal an einer Einmündung (621) entlang des Rückführungskanals als einen Zusammenführungspunkt einzumünden,
einen Zweigwärmetauscher (710), der entlang des Zweigkanals angeordnet ist, und
einen Schalter (720), der eingerichtet ist, den Strom des Wärmeübertragungsmediums zu schalten zwischen:

einer Route von der Wärmequelleneinheit über die Gabelung entlang des Vorwärtskanals, des Tankwärmetauschers und der Einmündung entlang des Rückführungskanals zurück zur Wärmequelleneinheit, und
einer Route von der Wärmequelleneinheit über die Gabelung entlang des Vorwärtskanals, des Zweigwärmetauschers und der Einmündung entlang des Rückführungskanals zurück zur Wärmequelleneinheit.

**Revendications**

1. Système de commande d'unité de source de chaleur (1000), comprenant :
un circuit de circulation de fluide caloporteur (600) dans lequel un fluide caloporteur peut circuler, le circuit de circulation de fluide caloporteur incluant :

un échangeur de chaleur de réservoir (201) qui est configuré de manière à recevoir le fluide caloporteur, et qui est configuré de manière à échanger de la chaleur entre le fluide caloporteur et de l'eau stockée dans un réservoir ;

une unité de source de chaleur (100) qui est configurée de manière à recevoir le fluide caloporteur, et qui est configurée de manière à mettre en oeuvre une opération parmi le chauffage et le refroidissement du fluide caloporteur ;

un canal aller (610) à travers lequel le fluide caloporteur circule de l'unité de source de chaleur vers l'échangeur de chaleur de réservoir ;

un canal retour (620) à travers lequel le fluide caloporteur circule de l'échangeur de chaleur de réservoir vers l'unité de source de chaleur ;

un capteur de température d'eau de réservoir (S(t)) qui est configuré de manière à détecter une température « Tt » de l'eau stockée dans le réservoir ;

un capteur de température de fluide caloporteur qui est configuré de manière à détecter une température « Tm(in) » du fluide caloporteur revenant à l'unité de source de chaleur par le biais du canal retour dans le circuit de circulation de fluide caloporteur ;

un capteur de température de fluide caloporteur supplémentaire (S(out)) qui est configuré de manière à détecter une température « Tm(out) » du fluide caloporteur sortant de l'unité de source de chaleur à travers le canal aller dans le circuit de circulation de fluide caloporteur ; et

un régulateur qui est configuré de manière à commander l'unité de source de chaleur sur la base d'une différence de température entre la température « Tt » de l'eau détectée par le capteur de température d'eau de réservoir et une valeur moyenne de la température « Tm(in) » du fluide caloporteur, détectée par le capteur de température de fluide caloporteur et de la température « Tm(out) » du fluide caloporteur, détectée par le capteur de température de fluide caloporteur supplémentaire.

2. Système de commande d'unité de source de chaleur selon la revendication 1, dans lequel :

l'unité de source de chaleur est un dispositif de thermopompe qui inclut un compresseur dont la fréquence de fonctionnement peut être commandée ; et

le régulateur est configuré de manière à commander la fréquence de fonctionnement du compresseur en tant que la commande de l'unité de source de chaleur.

3. Système de commande d'unité de source de chaleur selon l'une quelconque des revendications 1 ou 2, dans lequel l'unité de source de chaleur est configurée de manière à chauffer le fluide caloporteur.

4. Système de commande d'unité de source de chaleur selon l'une quelconque des revendications 1 à 3, comprenant en outre :

un canal de dérivation (700) qui est configuré de manière à se séparer du canal aller au niveau d'une fourche (611) le long du canal aller, en tant que point de bifurcation, et qui est configuré de manière à rejoindre le canal retour au niveau d'une jonction (621) le long du canal retour, en tant que point de réunion ;

un échangeur de chaleur de dérivation (710) installé le long du canal de dérivation ; et

un commutateur (720) qui est configuré de manière à commuter le flux du fluide caloporteur entre :

un trajet partant de l'unité de source de chaleur par le biais de la fourche le long du canal aller, de l'échangeur de chaleur de réservoir et de la jonction le long du canal retour, et revenant à l'unité de source de chaleur ; et

un trajet partant de l'unité de source de chaleur par le biais de la fourche le long du canal aller, de l'échangeur de chaleur de dérivation et de la jonction le long du canal retour, et revenant à l'unité de source de chaleur.

# Fig. 1

# Fig. 2

# Fig. 3

S101

START OF WATER HEATING OPERATION

S102

$Tt \geqq Ta$

YES → END OF WATER HEATING OPERATION

S103

NO

S104

$Tm(in) - Tt > \Delta Tb1$

YES → REDUCE COMPRESSOR OPERATING FREQUENCY

S105

NO

S106

$Tm(in) - Tt < \Delta Tb1$

YES → INCREASE COMPRESSOR OPERATING FREQUENCY

S107

NO

S108

$Tm(in) - Tt = \Delta Tb1$

14

# Fig. 4

HEATED-WATER OUTLET TEMPERATURE

RETURN-WATER TEMPERATURE

HEAT-PUMP
MAXIMUM OUTLET
TEMPERATURE
OF HEATED WATER

WATER
TEMPERATURE

TANK-WATER
TARGET
TEMPERATURE

TANK-WATER TEMERATURE

TIME

# Fig. 5

WAER
TEMPERATURE

HEATED-WATER OUTLET TEMPERATURE

TANK-WATER TEMPERATURE

TANK-WATER
TARGET
TEMPEATURE

Ta

RETURN-WATER TEMPERATURE

TIME

# Fig. 6

S101

START OF WATER HEATING OPERATION

S102

$Tt \geqq Ta$

YES → END OF WATER HEATING OPERATION

S103

NO

S204

$Tm(out) - Tt > \triangle Tb2$

YES → REDUCE COMPRESSOR OPERATING FREQUENCY

S105

NO

S206

$Tm(out) - Tt < \triangle Tb2$

YES → INCREASE COMPRESSOR OPERATING FREQUENCY

S107

NO

S208

$Tm(out) - Tt = \triangle Tb2$

# Fig. 7

S101

START OF WATER HEATING OPERATION

S102

$Tt \geqq Ta$

YES → END OF WATER HEATING OPERATION

S103

NO

S304

$(Tm(out) + Tm(in)) \div 2 - Tt > \Delta Tb3$

YES → REDUCE COMPRESSOR OPERATING FREQUENCY

S105

NO

S306

$(Tm(out) + Tm(in)) \div 2 - Tt < \Delta Tb3$

YES → INCREASE COMPRESSOR OPERATING FREQUENCY

S107

NO

S308

$(Tm(out) + Tm(in)) \div 2 - Tt = \Delta Tb3$

# Fig. 8

# Fig. 9

# Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012016051 A
- JP 2007198630 B
- JP 9068369 A